# EUROPEAN PATENT APPLICATION

(11) **EP 1 569 060 A1**
(43) Date of publication of application: **31.08.2005**
(21) Application number: 03775894.3
(22) Date of filing: 26.11.2003
(51) Int. Cl.: G05B 19/418

(54) **PART ORDERING SYSTEM AND PART ORDERING METHOD**

(30) Priority: 29.11.2002 JP 2002348588
(71) Applicant: HONDA MOTOR CO., Ltd., Tokyo 107-8556 (JP)
(72) Inventor: Tanaka, Yuuji, c/o Honda Motor Co., Ltd., Tokyo 107-8556 (JP); Karou, Wataru, c/o Honda Motor Co., Ltd., Tokyo 107-8556 (JP)
(74) Representative: Donné, Eddy
(86) International application number: PCT/JP2003/015076
(87) International publication number: WO 2004/051386

(57) **Abstract**

This invention makes it possible to efficiently order repair parts for which there is little demand and which is difficult to predict.

An object guarantee account that is the object of collective ordering is extracted from the current-transaction DB group 4, a new account is newly created in the guarantee DB 5, and an adjustment-details list (for customer use) 6, adjustment-summary list (for customer use) 7, adjustment-details list (for internal use) 8 and adjustment-summary list (for internal use) 9 are created. The customer examines accounts and quantities based on the adjustment-details list (for customer use) 6 and adjustment-summary list (for customer use) 7, and the user's department examines account and quantities based on the adjustment-details list (for internal use) 8 and adjustment-summary list (for internal use) 9, the results are then adjusted to match the examination results of the customer, and the guarantee DB is properly updated.

## Description

### BACKGROUND OF THE INVENTION

### Field of the Invention:

This invention relates to a part ordering system and part ordering method, and more particularly to a part ordering system and part ordering method for collectively ordering parts based on prediction of demand.

### Description of the Related Art:

Conventionally, when ordering repair parts from a parts manufacturer there are parts that can be collectively ordered periodically, and there are parts that cannot be collectively ordered periodically because there is little demand and it is difficult to predict, such as for a part that is for an old model and several years have passed since mass production ended. For a brand manufacturer (ordering side), the number of old-model parts occupies a large percentage of the parts managed, so the brand manufacturer, with the purpose of reducing its inventory burden, desires for the parts manufacturer to deliver small quantities in a short period of time whenever possible.

Also, the order-information-supply system disclosed in Japanese patent publication No. 2001-250073 (Fig. 1) comprises: an order-information-output unit that outputs a restock-request quantity based on the ordered lot as ordering information when the inventory quantity on the day of processing is less than the restock point; an order-prediction-information-output unit that outputs the predicted date for the next restock request and the next predicted restock quantity for that predicted date as order-prediction information, when it is predicted that the inventory quantity will be less than the restock point based on the average daily scheduled shipping quantity that was calculated from the shipping record for a fixed period in the past and for the current year; and a order-information-transmission unit that automatically sends the order information and order-estimation information to the supplier at a set interval; and by supplying periodic order information together with future order-prediction information to the supplier, it is possible to improve the accuracy of the production plan on the supplier's side and to improve the one's own inventory-management efficiency. (Refer to Japanese patent publication No. 2001-250073 (Fig. 1).)

However, in order to deliver parts for which there is little demand in a short period of time, the parts manufacturer had to produce parts based on predictions of demand and carry the inventory burden. Therefore, there was a problem in that set up losses and material losses occurred, and that was reflected in the cost, so the purchase price for the brand manufacturer increased, and similarly the burden increased.
Also, in the system disclosed in Japanese patent publication No. 2001-250073 (Fig. 1), since there is little demand and it difficult to predict demand, normally it cannot be applied to the case where it is not possible to collectively order parts periodically.

This invention takes into consideration the conditions described above, and makes it possible to reduce set-up losses and material losses on the side of the parts manufacturer, as well as keep the purchase price on the side of the brand manufacturer down.

### DISCLOSURE OF INVENTION

The part ordering system of claim 1 comprises: a collective-ordering means by which the user sends a collective order to a parts manufacturer based on the predicted demand quantity for a specified period; a delivery means by which the parts manufacturer delivers the object parts of the collective order to the user at undetermined times according to the order from the user; a judgment means of determining whether or not the total number of parts delivered to the user by the parts manufacturer during a specified period of time when the user orders parts from the parts manufacturer is greater than the predicted demand quantity of the part collectively ordered by the user from the parts manufacturer; and a buying means by which the user orders and buys just the amount of the remaining quantity given by the difference between the predicted demand quantity and total quantity of parts from the parts manufacturer when it is determined by the judgment result of the judgment means that the total quantity is not greater than the predicted demand quantity.

Also, it is possible to further comprise a memory means of storing at least the sales account corresponding to the part, starting date and ending date for ordering the part, and sales accounts for other parts; and to apply a specified mark to sales accounts stored in the memory means that correspond to parts that will be the object of a collective order.

Moreover, it is possible to apply a specified mark to sales accounts stored in the memory means that correspond to parts bought by the buying means.

Furthermore, it is possible for buying by the buying means to be performed on the first day of the month, and for the sales accounts that are the objects of buying to be sales accounts whose processed month is the ending month, and sales accounts that have a inventory-buying flag attached.

Also, it is possible for the collective ordered quantity of a part to be bought by the buying means the next year be the difference of the quantity of parts bought by the buying means subtracted from the predicted demand quantity.

Moreover, when it is determined by the judgment result of the judgment means that the total quantity is greater than the predicted demand quantity, it is possible to remove the part from collective ordering and make it the object of normal ordering.

The part ordering method of claim 6 comprises: a collective-ordering step by which the user sends a collective order to a parts manufacturer based on the predicted demand quantity for a specified period; a delivery step by which the parts manufacturer delivers the object parts of the collective order to the user at undetermined times according to the order from the user; a judgment step of determining whether or not the total number of parts delivered to the user by the parts manufacturer during a specified period of time when the user orders parts from the parts manufacturer is greater than the predicted demand quantity of the part collectively ordered by the user from the parts manufacturer; and a buying step by which the user orders and buys just the amount of the remaining quantity given by the difference between the predicted demand quantity and total quantity of parts from the parts manufacturer when it is determined by the judgment result of the judgment step that the total quantity is not greater than the predicted demand quantity.

### BRIEF DESCRIPTION OF THE DRAWINGS

Fig. 1 is a drawing of the job flow for explaining the set-up-management process of an embodiment of the part ordering system of this invention.
Fig. 2 is a drawing of the job flow for explaining the set-up-management process of an embodiment of the part ordering system of this invention.
Fig. 3 is a drawing of the job flow for explaining the receiving-management process of an embodiment of the part ordering system of this invention.
Fig. 4 is a drawing of the job flow for explaining the receiving-management process of an embodiment of the part ordering system of this invention.
Fig. 5 is a drawing of the job flow for explaining the remaining-materials-management process of an embodiment of the part ordering system of this invention.
Fig. 6 is a drawing of the job flow for explaining the buying-management process of an embodiment of the part ordering system of this invention.
Fig. 7 is a drawing of the job flow for explaining the buying-management process of an embodiment of the part ordering system of this invention.

### DESCRIPTION OF THE PREFERRED EMBODIMENT

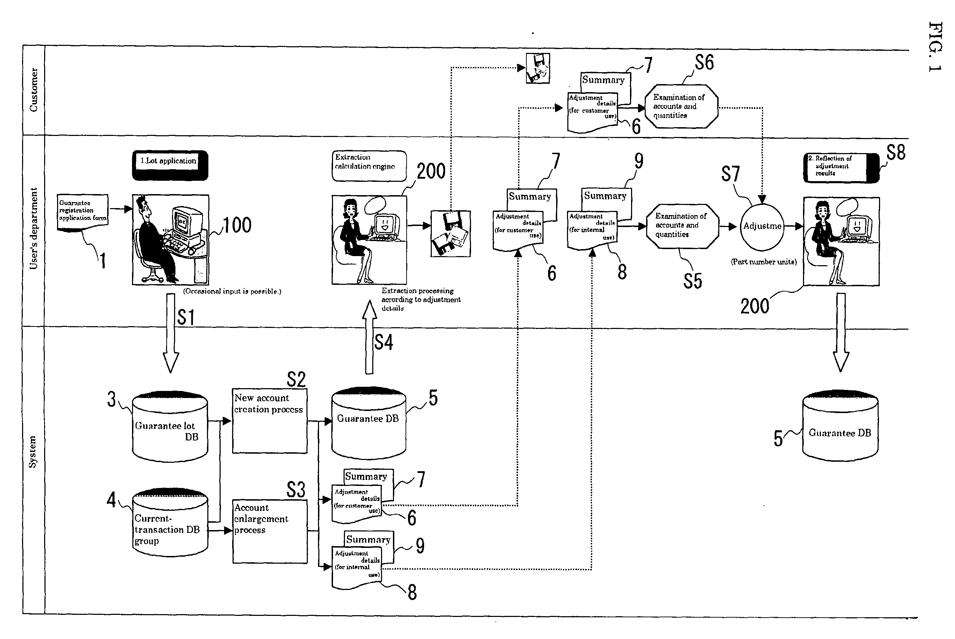

The construction and operation of an embodiment of the part ordering system of this invention will be explained below. Fig. 1 is a drawing of the job flow showing the construction and operation of an embodiment of the invention.

As shown in the same figure, this embodiment comprises: a terminal 100 and terminal 200 that are located in the user's department; a guarantee lot database (D/B) 3 on the system side that stores the data to be processed; a current-transaction database (D/B) group 4 that stores the account information (sales account information) for all of the parts; a guarantee database (D/B) 5 that stores account information for specified parts as collective parts (hereafter referred to as guarantee parts); a part database (D/B) 10 that stores information related to a part; an order database (DB) 13 that stores order information; a procurement database (DB) 14 that stores procurement information; and an online-warehouse system (NSQ) 18 that makes it possible to see online the process from receiving to packaging to storage.

Each database is created inside the memory apparatus of a personal computer or workstation (not shown in the figure), and connected over a network such that data can be sent and received.

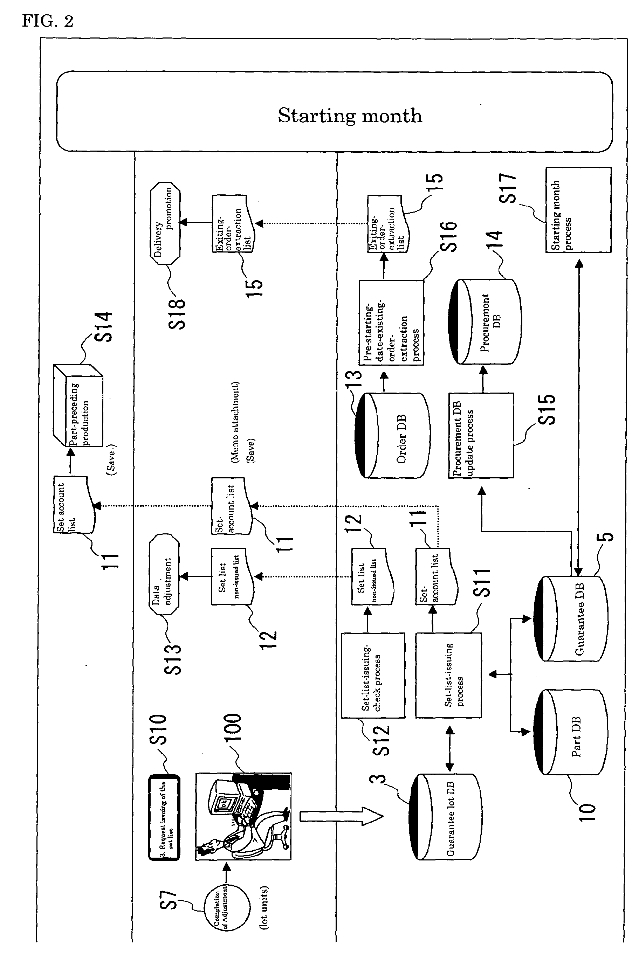

Next, the procedure for the set-up (account selection) management process of this embodiment will be explained with reference to Fig. 1 and Fig. 2. First; in step S1, lot application contents based on the guarantee registration application form are input from the terminal 100, and stored in the guarantee DB 3. The lot application contents contain items such as the customer, pre-existing conditions, starting month, ending month, desired date for issuing documentation, and the like.

Next, in step S2, the process for creating a new account is executed. The new-account-creation process is performed on the last day of the month, and the data processed, is the account corresponding to the lot-application contents; and this process extracts the account from the current-transaction DB 4 group and establishes a new account in the guarantee DB 5, and issues examination lists (adjustment details list (for customer use) 6 and adjustment summary list (for customer use) 7, and adjustment details list (for internal use) 8 and adjustment summary list (for internal use) 9).

Also, in step S3, the account-enlargement process is executed. The account-enlargement process is performed on the last day of the month, and the data processed is the lot one year after the new-lot application, or is a lot for which an enlarged request is registered; and this process creates a new account, and handles the output information and user correspondence the same as in the new-account-creation process. In other words, the next year, the account is automatically presented based on the conditions set in the first year.

Next, in step S4, the terminal 200 performs the extraction process from the guarantee DB 5 in accordance to the adjustment-details list (for customer use) 6 and the adjustment-details list (for internal use) 8. In other words, the manufacturer code, examination starting date and group are specified, and the same account information as the adjustment-details list (for customer use) 6 and the adjustment-details list (for internal use) 8 is extracted. The extracted data is saved on a specified and recording medium and sent to the customer.

Also, the adjustment-details list (for customer user) 6 and the adjustment-summary list (for customer use) 7 that were issued in step S2 and step S3 are supplied to the customer by way of the user's department, and the adjustment-details list (for internal user) 8 and the adjustment-summary list (for internal use) 9 are supplied to the user's department. In step S6, at the user's department, the account and quantity are examined based on the adjustment-details list (for internal user) 8 and the adjustment-summary list (for internal use) 9. In step S6, the customer examines the account and quantity based on the adjustment-details list (for customer user) 6 and the adjustment-summary list (for customer use) 7.

Next, in step S7, the user's department executes the adjustment process on the examination results by the customer and the examination results by the user's department in units of part numbers; and in step S8, the adjustment-result-reflection process is performed, and the guarantee DB 5 is properly updated. The account-new-registration data obtained from the adjustment-result-reflection process comprises: the part number, part name, customer, year, registration date, starting month, ending month, status, number of guarantees, and delivery-lead time (L/T). Also, the account-details-update-prediction-corrected-number-update data obtained by the adjustment-result-reflection process comprises: the part number, examination starting date, starting month, ending month, number of guarantees and delivery lead time. The guarantee DB 5 is properly updated with this data.

Next, in step S9, the user's department executes the adjustment-completion process, and in step S10, the set-list-issuing-request is sent from the terminal 100 to the guarantee lot DB 3.

Next, in step S11, the set-list-issuing process is executed. The set-list-issuing process is performed on the last day of the month, and the processed data is the KEY data (data used as a KEY, and includes 'old model', 'yearly demand quantity', 'number of times ordered', 'starting year and month', 'ending year and month', and 'part number'; here the number of times ordered is taken to be 2 times a year, and the number of the yearly demand quantity is divided into groups) that is registered in the guarantee-lot DB 3, and the number of guarantees (number of concluded guarantees (however, this does not include 0, and includes the number of continuations)); and this process extracts the object data to be processed from the guarantee-lot DB 3, updates the status of the corresponding account in the guarantee DB 5 from A to B, creates ID-classification-setting data of the part DB 10, and issues a guarantee-set-account-list (set-account list) 11. At this time, a guarantee mark 'G' is given to the guarantee account.

Also, in step S12, the set-list-issuing-check process is executed. The set-list-issuing-check process is performed on the 25th of each month (accounting cutoff date), and the processed data is the lot information in which the accounts for the start of the next month exists; and the process issues a set-list-non-issued list 12 for checking whether or not the issuing of the set list for the lot of the account for which delivery will start the next month has been requested, and it is used to issue the set list or to delay the starting year and month.

The set-list-non-issued list 12 is supplied to the user's department, and in step S13 the data-adjustment process is performed. On the other hand, the set-account list 11 is provided to the user's department where a memo is added and it is saved. It is also provided to the customer, and in step S14, the customer saves the set-account list 11, and part-preceding production is performed.

Also, in step S15, the procurement-DB-update process is executed. The procurement-DB-update process is performed on the first day of the month, and the processed data is the starting date for the next month or present month, and is set-list-issued data; and the process creates data that initializes the application number, minimum-application lot, and application-order type.

Moreover, in step S16, the pre-starting-date-existing-order-extraction process is executed. The pre-starting-date-existing-order-extraction process is performed on the first day of the month, and the processed data is normal order information of the account beginning that month; and the process extracts the order data to be handled separately from the guarantee from the order DB 13 and issues it as an existing-order-extraction list, and performs delivery promotion separate from the guarantee. Order information extracted from the order DB 13 for which there is a remaining order on the guarantee starting date for a specified day before the previous month is printed in the existing-order-extraction list 15. This existing-order-extraction list 15 is provided to the user's department, and in step S18, the delivery-promotion process is performed.

Also, in step S17, the starting-month process is executed. The starting-month process is performed on the last day of the month, and the processed data is the data that will be the start of delivery for the next month; and the process creates update data that advances the status of the account corresponding to the guarantee DB 5 from 'B' to 'C', and then supplies the data to the guarantee DB 5 and updates the status from 'B' to 'C'.

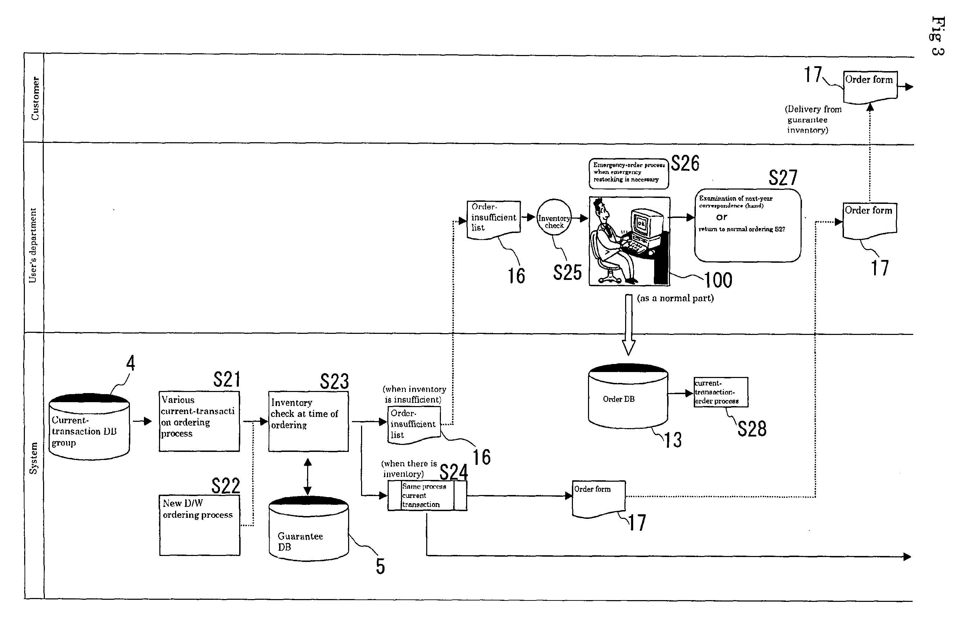

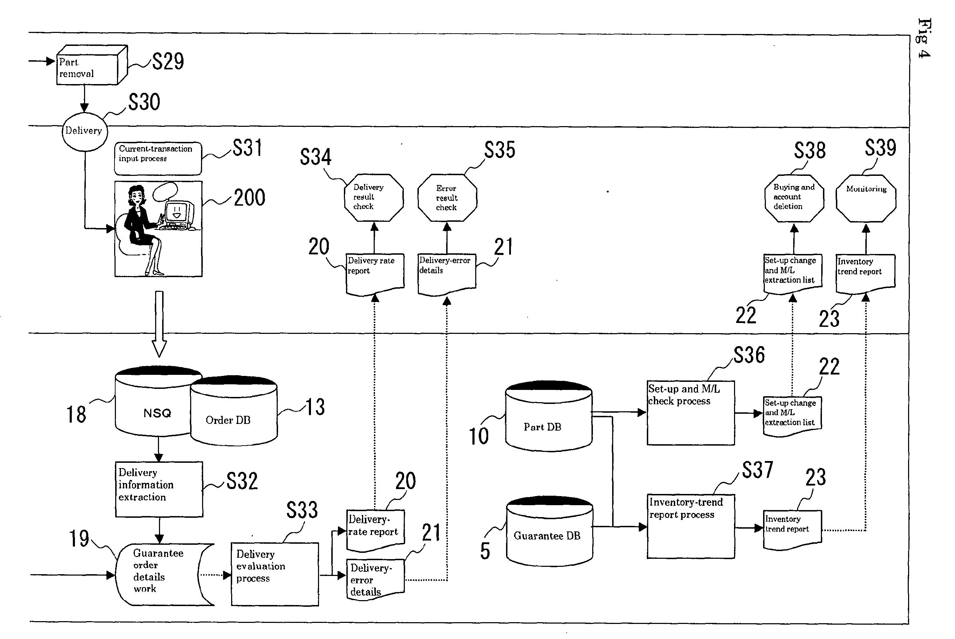

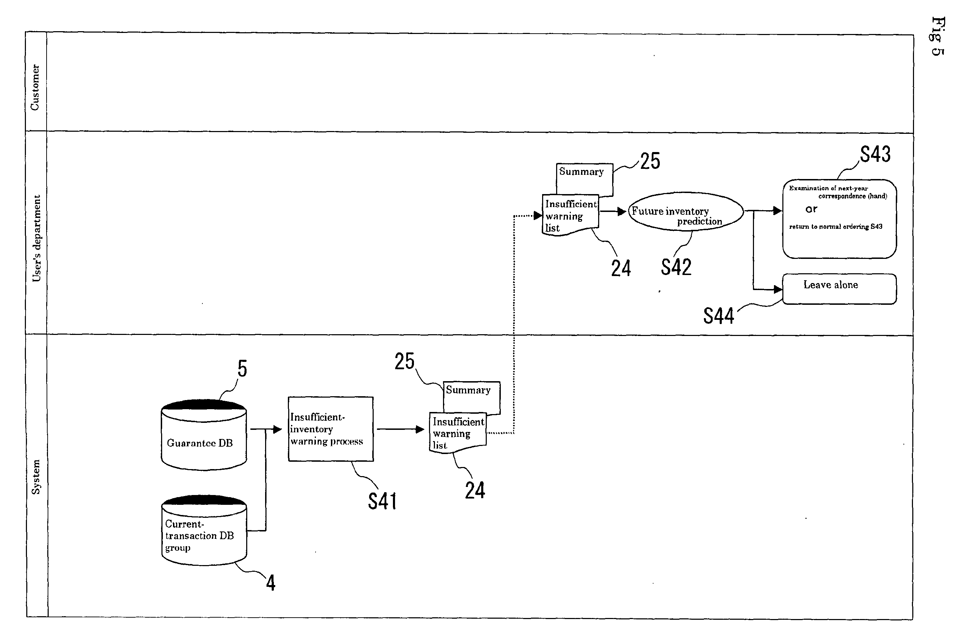

Next, the procedure of the delivery-management process will be explained with reference to Fig. 3 and Fig. 4. First, in step S21 various current-transaction-order processing is executed based on the data in the current-transaction DB group 4. This processing includes the inventory check at the time of the order that is performed in step S23 to be described later. Also, in step S22 the new D/W (Daily/Weekly) order process is executed.

Next, in step S23, the inventory check at the time of the order is executed. The inventory check at the time of order is performed at the time of the various order processing, and the processed data is the order data for guarantee parts corresponding to the accounts to which the guarantee mark 'G' has been given; and the process performs a check of whether or not the inventory quantity of guarantee parts is greater than the ordered quantity of guarantee parts, and when there is insufficient inventory (ordered quantity of guarantee parts > inventory quantity of guarantee parts) it creates an order-insufficient list 16, and when there is inventory, it updates the total for the ordered quantity of guarantee parts in the guarantee DB 5. The list of accounts in which there is not enough inventory quantity for the ordered quantity is printed in the order-insufficient list 16. This order-insufficient list 16 is provided to the user's department.

In step S23, when it is determined that there is inventory, the process advances to step S24, and processing that is the same as the current transaction is executed. In other words, the order form 17 for a guarantee part is issued and provided to the customer by way of the user's department, and the order information is supplied to the guarantee-order-details work 19.

In step S25, at the user's department, the inventory-confirmation process is performed based on the order-insufficient list 16, and in step S26, the emergency-order process when emergency restocking is necessary is executed. In other words, order data for a part for which there is an insufficient inventory quantity is supplied to the order DB 13 as normal order data for a part, and in step S28, the current-transaction-order process is executed.

Also, in step S27, based on the order-insufficient list 16, it is examined whether or not to perform processing corresponding to the next year (hand) or to perform a process that will return to normal ordering. The processing for the next year (hand) is a process in which the starting month for the next year is a different month than for the first year, and the process to return to normal ordering is a process that moves away from the guarantee and performs normal ordering when the demand during then guarantee period is greater than first predicted.

In step S29, the customer removes the guarantee parts from the guarantee inventory, and in step S30 they are delivered to the user's department. In step S31, at the user's department, the current-transaction-input process is executed from the terminal 200, and the input information is supplied to and stored in the online-warehouse system (NSQ) 18.

Next, in step S32, the delivery-information-extraction process is executed. The delivery-information-extraction process is performed every month, and the processed data is the guarantee order data delivered on that day; and the process saves the guarantee order data in which the input information is reflected in the guarantee-order-details work 19.

Next, in step S33, the delivery-evaluation process is executed. The delivery-evaluation process is performed on the first day of the month, and the processed data is the order-details data for the previous month; and the process issues the delivery-rate report 20 and delivery-error-details list 21 for the previous month from the guarantee-order-details work 19. The delivery-rate report 20 is a list indicating the delivery status for the previous month, and the delivery-error-details list 21 is a list of orders from among the orders for a specified delivery date in the previous month that were not input in the warehouse on the specified date.

The delivery-rate report 20 that was issued in step S33 is provided to the user's department, and at the user's department, in step S34, the confirmation process for checking the delivery results is performed. Also, in step S33, the delivery-error-details list 21 is provided to the user's department, and at the user's department, in step S35, the confirmation process for checking the error results is performed.

In step S36, the set-up change and M/L (Maker Lay-out) check process is executed. The set-up change and M/L check process is performed every week, and the processed data is the account for which the set-up change or M/L occurred; and the process performs a set-up and M/L check process for the part DB 10 and issues a set-up change and M/L extraction list 22. Here the set-up change includes when sales for the object sales account are stopped, or when a different account is combined, and the M/L is a change in the parts manufacturer. The set-up change and M/L extraction list 22 is provided to the user's department, and at the user's department, in step S38, a buying and account deletion process is executed.

Also, in step S37, the inventory-trend-report process is executed. The inventory-trend-report process is performed on the first day of the month, and the processed data is all of the guarantee accounts stored in the guarantee DB 5; and the process issues an inventory-trend report 23, which is a list for checking how the current inventory changed since the date the guarantee examination started. The inventory-trend report 23 is provided to the user's department, and at the user's department, in step S39 monitoring of the inventory is performed.

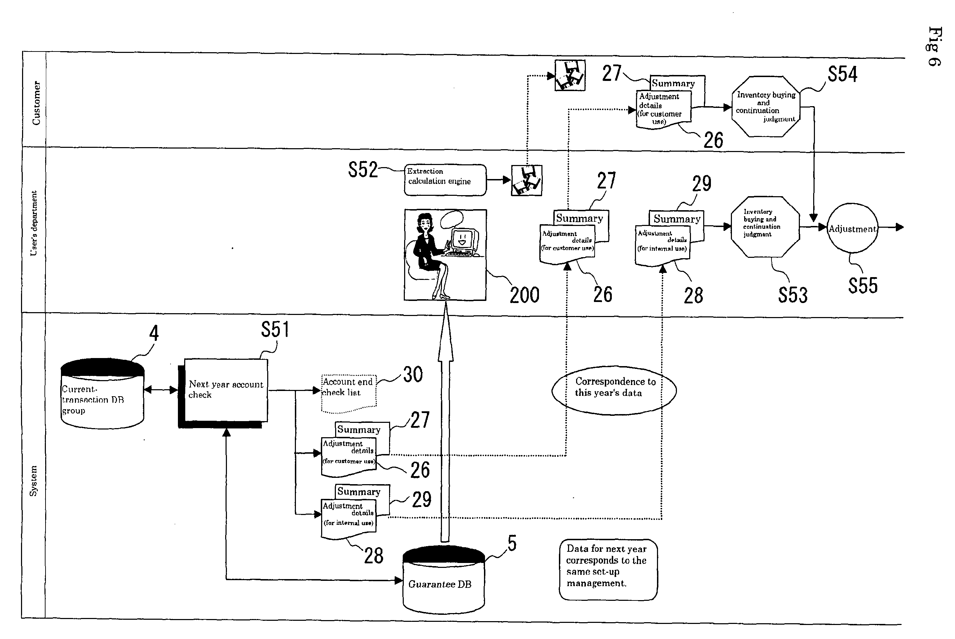

Next, the procedure of the remaining-material-management process of this embodiment will be explained with reference to Fig. 5. First, in step S41, the insufficient-inventory-warning process is executed. The insufficient-inventory-warning process finds the ratio of the set guarantee quantity (for example the predicted demand quantity for one year) and the remaining quantity (= remaining quantity/set guarantee quantity), and issues an insufficient-warning list 24 and insufficient-warning summary 25 when that ratio is less than a set value.

The insufficient-warning list 24 and insufficient-warning summary 25 are provided to the user's department, and at the user's department, in step S42, the future inventory is predicted based on the insufficient-warning list 24 and insufficient-warning summary 25. Next, in step S43, it is examined whether or not to perform processing corresponding to the next year (hand) or to perform processing to return to normal ordering. The processing for the next year (hand) is a process in which the starting month for the next year is a different month than for the first year, and the process to return to normal ordering is a process that moves away from the guarantee and performs normal ordering when the demand during then guarantee period is greater than first predicted.

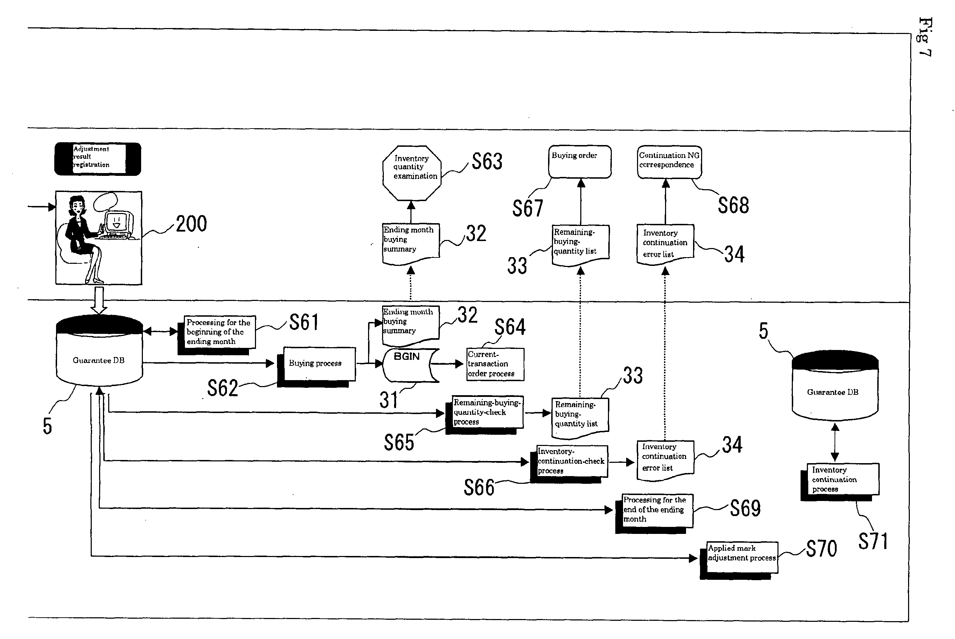

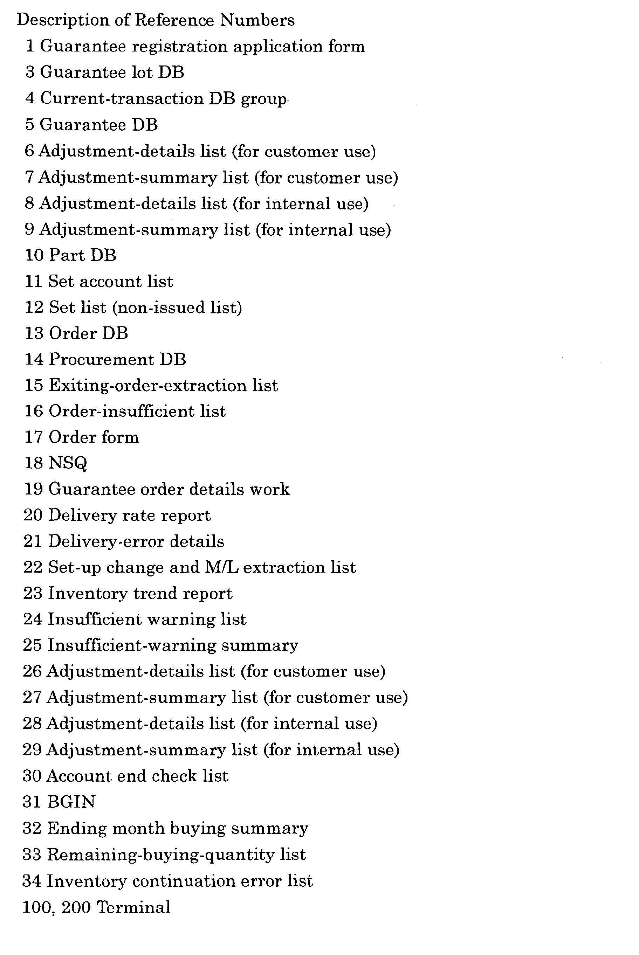

Next, the procedure for the buying-management process of this embodiment will be explained with reference to Fig. 6 and Fig. 7. First, in step S51, the process for checking the accounts for the next year is executed based on the data stored in the current-transaction DB group 4. The process for checking the accounts for the next year is performed on the last day of the month, and the processed data is the accounts for which the end month - preceding L/T (lead time) - 1 month (adjustment period) coincides with the processed month, and whose status is 'C'; the process sets in account units whether or not to continue to perform the guarantee for the next year as well for a period to which the preceding L/T (number of months to production of the guarantee parts) and adjustment period (in this case, one month) are added. The results are stored in the guarantee DB5. Also, the adjustment-details list (for customer use) 26 and adjustment-summary list (for customer use) 27, and the adjustment-details list (for internal use) 28 and adjustment-summary list (for internal use) 29, and account-end-check list 30 are issued.

Next, at the user's department, in step S52, a process of specifying the manufacturer code, examination starting date, and group and extracting account information from the guarantee DB 5 that is the same as that of the adjustment-details list (for customer use) 26 and the adjustment-details list (for internal use) 28 is executed. Also, the adjustment-details list (for customer use) 26 and adjustment-summary list (for customer use) 27 that were issued in step S51 are provided to the customer by way of the user's department. Also, the adjustment-details list (for internal use) 28 and adjustment-summary list (for internal use) 29 are provided to the user's department.

At the user's department, in step S53, the inventory buying and continued judgment process is performed based on the adjustment-details list (for internal use) 28 and adjustment-summary list (for internal use) 29. Also, on the customer side, the inventory buying and continued judgment process is performed based on the adjustment-details list (for customer use) 26 and adjustment-summary list (for customer use) 27. The user's department, in step S55, performs the adjustment process from the judgment result by the user's department in step S53, and the judgment result by the customer in step S54, and outputs the adjustment result.

In step S60 the user's department inputs the adjustment result using the terminal 200. The data indicating the input adjustment result is supplied to and stored in the guarantee DB 5. Next, in step S61, processing for the beginning of the ending month is executed. The processing for the beginning of the ending month is performed on the last day of the month, and the processed data are the accounts stored in the guarantee DB 5 for which the ending month is the next month; the process updates the status from 'C' to 'D'.

Also, in step S62, the buying process is executed. The buying process is performed on the first day of the month, and the processed data is the data stored in the guarantee DB 5 for which the processed month is the ending month, and data that has an inventory buying FLG (flag); the process creates data in a specified format, and registers it in BGIN 31, and issues a ending-month-buying summary 32. At this time, the inventory-buying FLG is given to the object inventory-buying account.

This ending-month-buying summary 32 is provided to the user, and in step S63, at the user's department, the inventory-quantity-checking process is executed based on this ending-month-buying summary 32. Also, in step S64, the current-transaction order process is executed based on the data in BGIN 31.

In step S65, the remaining-buying-quantity-check process is executed. The remaining-buying-quantity-check process is performed on the 25th of each month (accounting cutoff date) and the processed data is the data when the processed month is the ending month; the process checks whether or not there are remaining materials for the aforementioned data, and issues a remaining-buying-quantity list 33 when there is remaining material. This remaining-buying-quantity list 33 is provided to the user's department, and at the user's department, in step S67, a buying order is performed based on this remaining-buying-quantity list 33. The buying-order process is a process for placing an order for buying inventory for the account printed in the remaining-buying-quantity list 33, and it is a process that occurs when there was an omission in handling an order NG in the buying process at the beginning of the month.

Also, in step S66, the inventory-continuation check process is executed. The inventory-continuation check process is performed on the 25th of each month, and the processed data is data for which the processed month is the ending month, and data that has an inventory-continuation FLG. This inventory-continuation FLG is set in the afternoon on the first day of the twelfth month. The process basically is not supposed to occur, however, it issues inventory-continuation data for which no new accounts are created as an inventory-continuation-error list 34. In other words, it is a process performed when the remaining quantity do not have to be bought due to circumstances of the parts manufacturer (customer). A list of accounts for parts of the inventory that are to be continued to the next year for which the accounts for the next year have not been created are printed in the inventory-continuation-error list 34.

This inventory-continuation-error list 34 is provided to the user's department. At the user's department, in step S68, a process of the continuation NG is executed based on this inventory-continuation-error list 34. In other words, there are no accounts created for the next year for the accounts listed in the inventory-continuation-error list 34.

Also, in step S69, the end-of-the-month processing for the ending month is executed. The end-of-the-month processing for the ending month is performed on the last day of the month, and the processed data is the data for the ending month stored in the guarantee DB 5; the process updates the status from 'D' to 'E'.

Also, in step S70, the applied-mark-adjustment process is executed. The applied-mark-adjustment process is performed on the last day of the month, and the processed data is all of the registered guarantee accounts stored in the guarantee DB 5; the process creates update data for the guarantee marks in the part DB 10 from the ending accounts and set-list-issued accounts. The data in the part DB 10 is updated based on this update data.

Also, in step S71, the inventory-continuation process is executed. The inventory-continuation process is performed as the process for the next month, and the processed data is data for which the processed month is the ending month, and data that has an inventory-continuation FLG; the process basically creates data for parts that correspond to the above data (accounts) and that start from the next month, and reflects the remaining quantity at that time onto the new data.

The construction and operation of the embodiment described above is an example, and needless to say, it is possible to make changes within a range that does not deviate from the scope or concept of the invention.

### Industrial Applicability

As described above, with the part ordering system and part ordering method of this invention, the user sends a collective order to a parts manufacturer based on the predicted demand quantity for a specified amount of time, the parts manufacturer delivers the object parts of a collective order to the user at undetermined times according to the order from the user, then it is determined whether or not the total number of parts delivered to the user by the parts manufacturer during a specified period of time when the user orders parts from the parts manufacturer is greater than the predicted demand quantity of the part collectively ordered by the user from the parts manufacturer, and the user orders and buys just the amount of the remaining quantity given by the difference between the predicted demand quantity and total quantity of parts from the parts manufacturer when it is determined by the judgment result of the judgment means that the total quantity is not greater than the predicted demand quantity, so planned lot production is possible even for parts for which there is little demand, and the production efficiency is increased, so it is possible to reduce the set-up losses and material losses on the side of the parts manufacturer, as well as keep the purchase price down on the side of the brand manufacturer.

## Claims

1. A part ordering system comprising:
a collective-ordering means by which the user sends a collective order to a parts manufacturer based on the predicted demand quantity for a specified period;
a delivery means by which said parts manufacturer delivers the object parts of said collective order to said user at undetermined times according to the order from said user;
a judgment means of determining whether or not the total number of said parts delivered to said user by said parts manufacturer during said specified period of time when said user orders parts from said parts manufacturer is greater than said predicted demand quantity of said part collectively ordered by said user from said parts manufacturer; and
a buying means by which said user orders and buys just the amount of the remaining quantity given by the difference between said predicted demand quantity and said total quantity of parts from said parts manufacturer when it is determined by the judgment result of said judgment means that said total quantity is not greater than said predicted demand quantity.

2. The part ordering system of claim 1 further comprising:
a memory means of storing at least the sales account corresponding to said part, starting date and ending date for ordering said part, and sales accounts for other parts; and wherein
a specified mark is applied to said sales accounts stored in said memory means that correspond to said parts that will be the object of said collective order.

3. The part ordering system of claim 2 wherein
a specified mark is applied to said sales accounts stored in said memory means that correspond to said parts bought by said buying means.

4. The part ordering system of any of the claims 1 to 3 wherein
buying by said buying means is performed on the first day of the month, and the sales accounts that are the objects of buying are sales accounts whose processed month is the ending month, and sales accounts that have a inventory-buying flag attached.

5. The part ordering system of claim 1 wherein
when said judgment result of said judgment means determines that said total quantity is greater than said predicted demand quantity, said part is removed from collective ordering and made the object of normal ordering.

6. A part ordering method comprising:
a collective-ordering step by which the user sends a collective order to a parts manufacturer based on the predicted demand quantity for a specified period;
a delivery step by which said parts manufacturer delivers the object parts of said collective order to said user at undetermined times according to the order from said user;
a judgment step of determining whether or not the total number of said parts delivered to said user by said parts manufacturer during said specified period of time when said user orders parts from said parts manufacturer is greater than said predicted demand quantity of said part collectively ordered by said user from said parts manufacturer; and
a buying step by which said user orders and buys just the amount of the remaining quantity given by the difference between said predicted demand quantity and said total quantity of parts from said parts manufacturer when it is determined by the judgment result of said judgment step that said total quantity is not greater than said predicted demand quantity.
